(19) Europäisches Patentamt
European Patent Office
Office européen des brevets

(11) **EP 4 481 866 A1**

(12) **EUROPEAN PATENT APPLICATION**
published in accordance with Art. 153(4) EPC

(43) Date of publication:
**25.12.2024 Bulletin 2024/52**

(21) Application number: **22927293.5**

(22) Date of filing: **14.11.2022**

(51) International Patent Classification (IPC):
$H01M\ 8/12^{(2016.01)}$    $B01J\ 23/755^{(2006.01)}$
$C02F\ 1/461^{(2023.01)}$    $H01M\ 4/90^{(2006.01)}$
$H01M\ 4/92^{(2006.01)}$    $H01M\ 8/1253^{(2016.01)}$
$H01M\ 8/126^{(2016.01)}$    $H02N\ 11/00^{(2006.01)}$

(52) Cooperative Patent Classification (CPC):
B01J 23/755; C02F 1/461; H01M 4/90; H01M 4/92;
H01M 8/12; H01M 8/1253; H01M 8/126;
H02N 11/00

(86) International application number:
**PCT/JP2022/042239**

(87) International publication number:
**WO 2023/157402 (24.08.2023 Gazette 2023/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.02.2022 JP 2022023191**

(71) Applicant: **Panasonic Intellectual Property
Management Co., Ltd.
Kadoma-shi, Osaka 571-0057 (JP)**

(72) Inventors:
• **TANIGUCHI, Noboru
Kadoma-shi, Osaka 571-0057 (JP)**
• **NAM, Hyunjeong
Kadoma-shi, Osaka 571-0057 (JP)**

(74) Representative: **Grünecker Patent- und
Rechtsanwälte
PartG mbB
Leopoldstraße 4
80802 München (DE)**

(54) **POWER GENERATION ELEMENT, POWER GENERATION DEVICE, AND POWER GENERATION METHOD**

(57) The present disclosure provides a novel power-generating element that is advantageous from the maintenance-free point of view. A power-generating element (1a) according to the present disclosure includes a first electrode (11), a second electrode (12), and a solid electrolyte (15). The first electrode (11) splits water. The solid electrolyte (15) is placed between the first electrode (11) and the second electrode (12). Ions generated by the splitting of the water at the first electrode (11) are conducted toward the second electrode (12) through the solid electrolyte (15). The splitting of the water at the first electrode (11) and the generation of the ions in the solid electrolyte (15) cause a potential difference between the first electrode (11) and the second electrode (12), so that electrical energy is supplied to the outside of the power-generating element (1a).

FIG. 1

**Description**

Technical Field

The present disclosure relates to a power-generating element, a power-generating apparatus, and a power-generating method.

Background Art

Conventionally, it has been known that electricity is generated through an electrochemical reaction.

For example, PTL 1 describes a thermochemical battery that can generate electricity when there is a temperature difference between a pair of electrodes. In this thermochemical battery, the pair of electrodes are joined to both ends of an electrolyte. At least one of the pair of electrodes is a thin-film electrode formed of a conducting polymer material. The thermochemical battery can generate electricity through oxidation-reduction reactions near joined surfaces of the electrolyte with the pair of electrodes when there is a temperature difference between the pair of electrodes. As the electrolyte, for example, an aqueous mixture solution of $K_3[Fe(CN)_6]$ and $K_4[Fe(CN)_6] \cdot 3H_2O$ is used.

NPL 1 describes an electrochemical system including a cathode of copper hexacyanoferrate and an anode of $Cu/Cu^{2+}$. This electrochemical system converts heat into electricity.

PTL 2 describes a thermoelectric generation element in which a first electrode and a second electrode face each other across a single electrolyte. In this thermoelectric generation element, the first electrode and the second electrode contain a material in and out of which identical metal ions reversibly move. As the electrolyte, a predetermined electrolyte solution is used.

PTL 3 describes utilizing, as a solid electrolyte of a fuel battery, an ion conductor formed of a predetermined perovskite oxide.

Citation List

Patent Literature

    PTL 1: International Publication No. 2018/079325
    PTL 2: Japanese Unexamined Patent Application Publication No. 2018-73596
    PTL 3: Japanese Unexamined Patent Application Publication No. 2001-307546 Non Patent Literature

NPL 1: S. W. Lee, et al., "An electrochemical system for efficiently harvesting low-grade heat energy", Nature Communications 5, 3942 (2014)

Summary of Invention

Technical Problem

The present disclosure provides a novel power-generating element that has only few limits in use and that is advantageous from the maintenance-free point of view. Solution to Problem

A power-generating element of the present disclosure includes a first electrode that splits water, a second electrode, and a solid electrolyte which is placed between the first electrode and the second electrode. Ions generated by splitting water at the first electrode are conducted through the solid electrolyte toward the second electrode. Electrical energy is supplied to an outside of the power-generating element by causing a potential difference between the first electrode and the second electrode.

Advantageous Effects of Invention

The present disclosure makes it possible to provide a novel power-generating element that has only few limits in use and that is advantageous from the maintenance-free point of view.

Brief Description of Drawings

[Fig. 1] Fig. 1 is a diagram schematically explaining an example of a power-generating element of the present disclosure and a power-generating principle thereof.

[Fig. 2] Fig. 2 is a diagram schematically explaining an example of a thermochemical battery.

[Fig. 3A] Fig. 3A is graph showing a relationship between protonic conductivity of a variety of solids and temperature.

[Fig. 3B] Fig. 3B is graph showing a relationship between protonic conductivity of $BaZr_{0.8}Yb_{0.2}O_{3-\alpha}$ and temperature.

[Fig. 4] Fig. 4 is an exploded perspective view schematically showing an example of a power-generating apparatus of the present disclosure.

[Fig. 5] Fig. 5 is an exploded perspective view schematically showing another example of a power-generating apparatus of the present disclosure.

[Fig. 6] Fig. 6 is a graph showing a relationship between an electromotive force of a power-generating element according to Sample A-2 and temperature.

[Fig. 7] Fig. 7 is a graph showing an I-V characteristic of the power-generating element according to Sample A-2.

[Fig. 8] Fig. 8 is a graph showing a continuous discharge characteristic of the power-generating element according to Sample A-2.

[Fig. 9] Fig. 9 is a graph showing a relationship between an electromotive force of a power-generating apparatus according to Sample A-19 in the first cycle and the fifth cycle and temperature.

Description of Embodiments

(Underlying Knowledge Forming Basis of the Present Disclosure)

From the $CO_2$ emission reduction, zero-carbon, and carbon neutral points of view, there has been demand for effective use of energy. It is conceivable that unused heat generated from factories, automobiles, and living environments may be effectively used, and such a technique involving the use of unused heat is incorporated as a national project and can be a technique that is important in the future society. For example, devices in a field called "energy harvesting" are expected to come into widespread use to convert unused heat into electrical energy for effective use.

As devices that convert heat into electrical energy, thermoelectric conversion elements or thermochemical batteries based on a physical phenomenon such as the Seebeck effect are possible. There are already some commercially available thermoelectric conversion elements. However, converting heat into electric energy through a thermoelectric conversion element requires a predetermined temperature difference between both ends of the thermoelectric conversion element. Meanwhile, thermochemical batteries are only used in particular uses such as rocket exhaust heat recovery and sodium-sulfur batteries and require further technical development from the point of view of using unused heat. Further, using an electrolyte solution as an electrolyte in a thermochemical battery can cause a decrease in amount of the electrolyte solution and leakage of the electrolyte solution to occur along with the supply of heat to the thermochemical battery, possibly requiring predetermined maintenance. Meanwhile, for example, it is conceivable that if a device that converts heat into electrical energy and that can be placed in places such as an enclosed space, a factory chimney, and a plant facility where maintenance is not easy can be provided, use of unused heat can be further facilitated.

To attain this object, the inventors diligently studied to provide a novel maintenance-free power-generating element that has only few limits in use. As a result, the inventors newly found that they can construct an element that can generate electricity through the use of water, which can be universally present in the environment. Based on this new finding, the inventors completed a thermoelectric conversion material according to the present disclosure.

(Embodiment of the Present Disclosure)

The following describes an embodiment of the present disclosure with reference to the drawings.

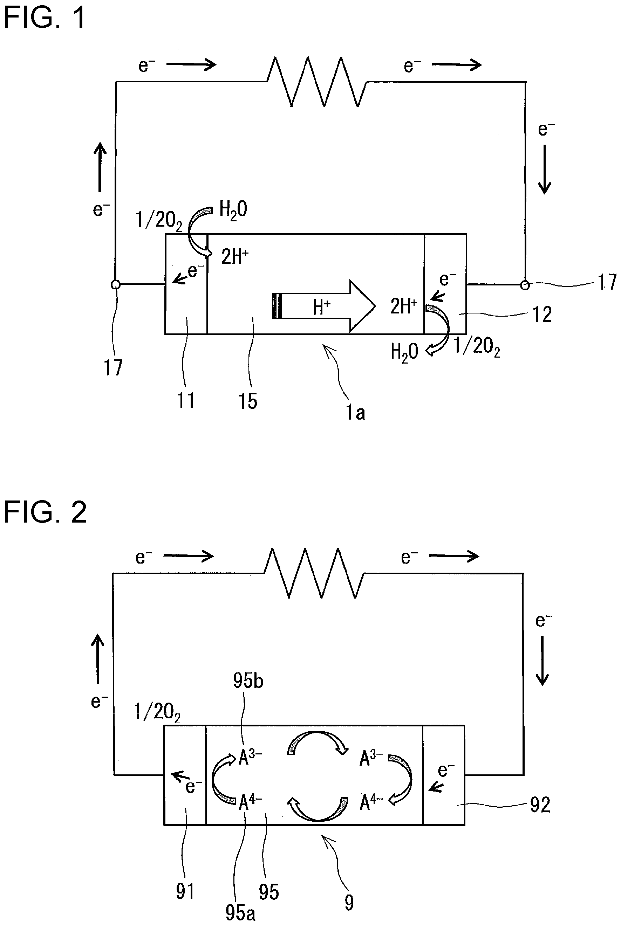

Fig. 1 is a diagram schematically explaining an example of a power-generating element of the present disclosure and a power-generating principle thereof. As shown in Fig. 1, the power-generating element 1a includes a first electrode 11, a second electrode 12, and a solid electrolyte 15. The first electrode 11 splits water. Water can be present in a liquid phase or a gas phase in an environment in which it has contact with the first electrode 11. When water comes into contact with the first electrode 11, the water splits and predetermined ions are generated. The solid electrolyte 15 is placed between the first electrode 11 and the second electrode 12. The ions generated by the splitting of the water at the first electrode 11 are conducted toward the second electrode 12 through the solid electrolyte 15. When the ions generated by the splitting of the water at the first electrode 11 and conducted through the solid electrolyte 15 come into contact with the second electrode 12, the second electrode 12 generates water. The water can be generated in a liquid phase or a gas phase in an environment in which it has contact with the second electrode 12. The splitting of the water and the generation of the ions at the first electrode 11 cause a potential difference between the first electrode 11 and the second electrode 12, and the conduction of the ions generates an electrical current. In other words, the splitting of the water and the generation of the ions at the first electrode 11, the conduction of the ions thus generated toward the second electrode 12 through the solid electrolyte 15, and the generation of the water at the second electrode 12 through the use of the ions thus conducted cause a potential difference between the first electrode 11 and the second electrode 12, and the conduction of the ions generates an electrical current. In this way, the power-generating element 1a supplies electrical energy to the outside of the power-generating element 1a.

Fig. 2 is a diagram schematically explaining an example of a thermochemical battery. As shown in Fig. 2, the thermochemical battery 9 includes an electrode 91, an electrode 92, and an electrolyte solution 95. The electrode 91 is an electrode that oxidizes an electrolyte at high temperatures, and the electrode 92 is an electrode that reduces an electrolyte at low temperatures. The electrolyte solution 95 contains a first ion 95a and a second ion 95b, and the first ion 95a and the second ion 95b have different valences from each other. For example, the first ion 95a is oxidized at the electrode 91 to turn into the second ion 95b. The second ion 95b is reduced at the electrode 92 to turn into the first ion 95a. When predetermined heat is supplied to the thermochemical battery 9 and, for example, the electrode 91 becomes high in temperature, the electrode 91 generates the second ions 95b by oxidizing the first ion 95a contained in the electrolyte solution 95, and an electron is given to the electrode 91. Meanwhile, the electrode 92 receives an electron having passed through an external circuit connected to the thermochemical battery 9 and generates the first ion 95a by reducing the second ion 95b contained in the electrolyte solution 95. In the electrolyte solution 95, convection and diffusion cause the first ion 95a to migrate toward the electrode 91 and cause the second ion 95b to migrate toward the electrode 92. This results in a series of oxidation-reduction reactions involving the first ion 95a and the second ion 95b, generating an electrical current in the external circuit. This generates an electromotive force corresponding to a difference in oxidation-reduction potential at a particular temperature between the electrode 91 and the electrode 92, generating an electrical current from the electrode 91, which is high in oxidation-reduction potential, to the electrode 92 which is low in oxidation-reduction potential. In this case, thermal energy supplied to the thermochemical battery 9 is consumed by the oxidation-reduction reactions and the diffusion of the ions, and an excess of the thermal energy is taken out as electrical energy.

Since the thermochemical battery 9 includes the electrolyte solution 95, the supply of heat to the thermochemical battery 9 can cause a solvent of the electrolyte solution 95 to evaporate to cause a decrease in amount of the electrolyte solution 95. In addition, the electrolyte solution 95 can leak from the thermochemical battery 9. For this reason, the thermochemical battery 9 requires predetermined maintenance. Meanwhile, the power-generating element 1a can generate electricity through contact between a fluid containing water that is present outside the power-generating element 1a and the first electrode 11. For this reason, electricity can be generated as long as water is present in an environment in which it has contact with the first electrode 11. For example, since a predetermined amount of moisture is always present in the air, the power-generating element 1a can generate electricity through the use of such moisture. In addition, the power-generating element 1a, in which ions generated by the splitting of water are conducted through a solid electrolyte, does not suffer from a decrease or leakage of an electrolyte solution. For this reason, the power-generating element 1a has only few limits in use and is advantageous from the maintenance-free point of view.

As noted above, the solid electrolyte 15 exhibits ionic conductivity for ions generated by the splitting of water. The solid electrolyte 15 has ionic conductivity, for example, for one kind of ions selected from the group consisting of a proton, an oxide ion, a hydronium ion, and a hydroxide ion. In the example shown in Fig. 1, the solid electrolyte 15 has protonic conductivity.

The power-generating element 1a is described in more detail by taking as an example a case where protons are conducted through the solid electrolyte 15. For example, the catalytic activity of the first electrode 11 for water splitting at a predetermined temperature is higher than the catalytic activity of the second electrode 12 for water splitting at the predetermined temperature. In this case, a material of the first electrode 11 is different from a material of the second electrode 12. For example, heat can be supplied to the whole of the power-generating element 1a so that there is no temperature difference between the first electrode 11 and the second electrode 12. In this case, the difference in catalytic activity for water splitting between the first electrode 11 and the second electrode 12 causes the concentration of protons that are generated at the first electrode 11 to become higher than the concentration of protons that are generated at the second electrode 12. Heat may be supplied to the power-generating element 1a so that the temperature of the first electrode 11 becomes higher than the temperature of the second electrode 12. Also in this case, the difference in catalytic activity for water splitting between the first electrode 11 and the second electrode 12 causes the concentration of protons that are generated at the first electrode 11 to become higher than the concentration of protons that are generated at the second electrode 12.

The material of the first electrode 11 may be the same as the material of the second electrode 12. In this case, heat can be supplied to the power-generating element 1a so that the temperature of the first electrode 11 becomes higher than the temperature of the second electrode 12. Further, heat may be supplied to the whole of the power-generating element 1a so that there is no temperature difference between the first electrode 11 and the second electrode 12, and the power-generating element 1a may be put in an environment in which the concentration of moisture that is supplied to the first electrode 11 becomes higher than the concentration of moisture that is supplied to the second electrode 12. Also in these cases, the concentration of protons that are generated at the first electrode 11 becomes higher than the concentration of protons that are generated at the second electrode 12.

Such a difference in protonic concentration between the first electrode 11 and the second electrode 12 generates an electromotive force E according to Eq. (3), which is the Nernst equation given below. Further, protons diffuse throughout the solid electrolyte 15 due to the heat and the concentration difference, and the protons and oxygen react with each other at the second electrode 12 to generate water vapor. This water vapor diffuses out of the power-generating element 1a. An electromotive force entailed by a difference in ionic activity is generated between the first electrode 11 and the second electrode 12, and electrons migrate through the external circuit of the power-generating element 1a. The heat supplied to the power-generating element 1a is consumed by the splitting of the water at the first electrode 11 and the diffusion of the protons throughout the solid electrolyte 15. An excess energy of chemical energy entailed by the generation of the water at the second electrode 12 is taken out as electrical energy.

According to the first law of thermodynamics, the free energy G to be taken out is defined as Eq. (1) using the enthalpy H, the thermodynamic temperature T, and the entropy S.

$$G = H - TS \hspace{3cm} \text{Eq. (1)}$$

A relationship between the free energy G to be taken out and an electromotive force entailed by a battery reaction is expressed by Eq. (2). In Eq. (2), n is the number of reaction moles, $E_0$ is a standard electromotive force, and F is the Faraday constant 96485 $Cmol^{-1}$.

$$\Delta G_0 = -nE_0F \hspace{3cm} \text{Eq. (2)}$$

Using $a_{Ox}$ and $a_{Red}$ to express the ionic activity of an oxidation state and the ionic activity of a reduction state, respectively, in an oxidation-reduction reaction gives the Nernst equation of Eq. (3). In Eq. (3), $E_0$ is a standard electromotive force, R is the gas constant 8.31 $JK^{-1}mol^{-1}$, T is the absolute temperature, and z is the number of moving electrons, and F is the Faraday constant.

$$E = E^0 + (RT/zF)\ln(a_{Ox}/a_{Red}) \hspace{2cm} \text{Eq. (3)}$$

Also in a case where ions other than protons that are generated by the splitting of water are conducted through the solid electrolyte 15, the power-generating element 1a can generate electricity through the use of water that is present in an environment in which it has contact with the first electrode 11.

Thus, the power-generating element 1a is a novel power-generating element, produced by fusion of a thermodynamic phenomenon and an electrochemical principle, that uses, as an electrolyte source, water that is present in an environment in which the power-generating element 1a is put. The power-generating element 1a makes it possible, for example, to obtain electrical energy even without a temperature difference required for the Seebeck effect or other effects. As noted above, the power-generating element 1a can have a configuration A in which the catalytic activity of the first electrode 11 for water splitting at the predetermined temperature is higher than the catalytic activity of the second electrode 12 for water splitting at the predetermined temperature. The power-generating element 1a may have a configuration B in which the first electrode 11 and the second electrode 12 are formed of the same material as each other. In a case where the power-generating element 1a has the configuration A, the power-generating element 1a can generate electricity even if the concentration of water vapor around the power-generating element 1a is uniform. In a case where the power-generating element 1a has the configuration B, for example, the power-generating element 1a can generate electricity when heat is supplied to the power-generating element 1a so that the temperature of the first electrode 11 becomes higher than the temperature of the second electrode 12. In addition, in a case where the power-generating element 1a has the configuration B, the power-generating element 1a can also generate electricity when the concentration of moisture that is supplied to the first electrode 11 is higher than the concentration of moisture that is supplied to the second electrode 12.

The water to be split at the first electrode 11 of the power-generating element 1a may be water contained in the atmosphere, water that is present in an enclosed space, or water derived from humidified air supplied from outside.

The power-generating element 1a can be used to provide a power-generating method including (I), (II), (III), and (IV) as follows:

(I) putting the power-generating element 1a in an environment in which water is present to generate ions by splitting the water at the first electrode 11;
(II) conducting the ions generated in (I) toward the second electrode 12 through the solid electrolyte 15;
(III) generating water by oxidizing or reducing the ions generated in (I) at the second electrode 12; and
(IV) generating an electrical current outside the power-generating element 1a.

In the aforementioned power-generating method, for example, heat lower than or equal to 500°C is supplied to the power-generating element 1a. The temperature of heat that is supplied to the power-generating element 1a may be lower than or equal to 400°C, may be lower than or equal to 300°C, or may be lower than or equal to 200°C. The temperature of heat that is supplied to the power-generating element 1a is, for example, higher than or equal to 20°C.

The material of the first electrode 11 is not limited to a particular material as long as the first electrode 11 can split water. The first electrode 11 contains, for example, a predetermined metal or alloy. The predetermined metal or alloy contains at least one selected from the group consisting of Pt, Ag, Pd, Ru, Au, Cu, and Ni. In this case, the first electrode 11 can exhibit high catalytic activity for splitting of water.

The first electrode 11 may contain Fe or may contain Ti. The first electrode 11 may contain an Au-Al alloy, may contain a Pt-Ru alloy, or may contain an Ag-Pd alloy. A method for forming the first electrode 11 is not limited to a particular method. The first electrode 11 is obtained, for example, by forming a film of metal- or alloy-containing paste by printing or coating and baking the coating film. The first electrode 11 may be formed by sputtering, thermal spraying, or plating.

The material of the second electrode 12 is not limited to a particular material. As noted above, the material of the second electrode 12 may be the same as or different from the material of the first electrode 11. The material of the second electrode 12 may contain, for example, a predetermined metal or alloy. The predetermined metal or alloy contains at least one selected from the group consisting of Pt, Ag, Pd, Ru, Au, Cu, and Ni. In a case where the first electrode 11 and the second electrode 12 contain alloys, metals that the alloy contained in the first electrode 11 and the alloy contained in the second electrode 12 contain may be metals of an identical type to or may be metals of different types from each other. In a case where the metals that the alloy contained in the first electrode 11 and the alloy contained in the second electrode 12 contain are metals of an identical type, the proportions of the metals in the alloys contained in the first electrode 11 and the second electrode 12 may be identical to or different from each other. For example, in a case where the first electrode 11 and the second electrode 12 are alloys containing Cu and Pt, the content of Pt in the alloy of the first electrode 11 may be 20% by mass, and the content of Pt in the alloy of the second electrode 12 may be 5% by mass.

The second electrode 12 may contain Fe or may contain Ti. The second electrode 12 may contain a Au-Al alloy, may contain a Pt-Ru alloy, or may contain a Ag-Pd alloy. A method for forming the second electrode 12 is not limited to a particular method. The second electrode 12 is obtained, for example, by forming a film of metal- or alloy-containing paste by printing or coating and baking the coating film. The second electrode 12 may be formed by sputtering, thermal spraying, or plating.

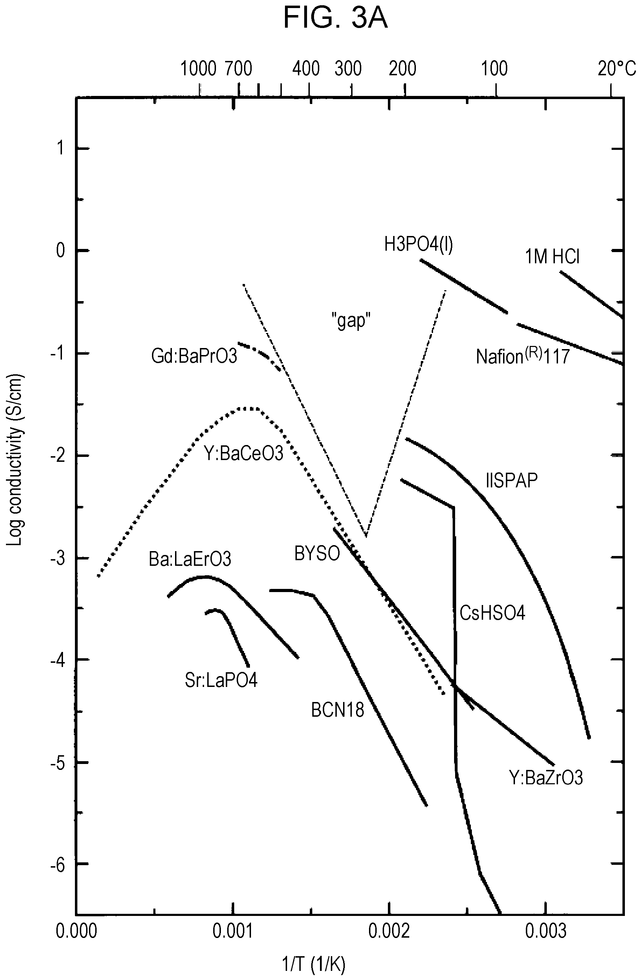

The ionic conductivity $\sigma$ of the solid electrolyte 15 is not limited to a particular value. The ionic conductivity $\sigma$ satisfies the condition $\sigma \geq 10^{-5}$ Scm$^{-1}$ at 500°C or lower. The ionic conductivity $\sigma$ is ionic conductivity for ions generated by the splitting of water and conducted through the solid electrolyte 15. When such a condition is satisfied, the amount of electricity that is generated by the power-generating element 1a tends to become larger. For example, the solid electrolyte 15 satisfies the condition $\sigma \geq 10^{-5}$ Scm$^{-1}$ at 20°C or higher. For example, the solid electrolyte 15 may satisfy the condition $\sigma \geq 10^{-5}$ Scm$^{-1}$ at 400°C or lower, may satisfy the condition $\sigma \geq 10^{-5}$ Scm$^{-1}$ at 300°C or lower, or may satisfy the condition $\sigma \geq 10^{-5}$ Scm$^{-1}$ at 200°C or lower. Fig. 3A is graph showing a relationship between protonic conductivity of a variety of solids and temperature. This graph is an excerpt from Bulletin of the Transdisciplinary Science Research Institute, Setsunan University, Vol. 5, No. 1, (2019), Article "Mechanism on appearance of superprotonic conductivity : In the case of zero-dimensional hydrogen-bonded superprotonic conductor". It is understood from Fig. 3A that predetermined solids satisfy the condition $\sigma \geq 10^{-5}$ Scm$^{-1}$ at 500°C or lower.

A material of the solid electrolyte 15 is not limited to a particular material. The solid electrolyte 15 is, for example, an inorganic solid electrolyte. In this case, the power-generating element 1a tends to have high durability even if heat is supplied to the power-generating element 1a. For this reason, the power-generating element 1a has fewer limits in use.

The solid electrolyte 15 contains, for example, a perovskite oxide. This makes it easy for the solid electrolyte 15 to have the desired ionic conductivity $\sigma$.

The composition of the perovskite oxide contained in the solid electrolyte 15 is not limited to a particular composition as long as ions generated by the splitting of water at the first electrode 11 can be conducted through the solid electrolyte 15. The perovskite oxide contained in the solid electrolyte 15 has, for example, a composition represented by $BaZr_{1-x-y}Ce_xM_yO_{3-\alpha}$. In this composition, the conditions $0 \leq x < 0.5$ and $0.05 \leq y \leq 0.25$ are satisfied. In addition, in this composition, M is a trivalent metal element and $\alpha$ represents an amount of oxygen deficiency. In this case, the ionic conductivity of protons through the solid electrolyte 15 tends to become higher, and the amount of electricity that is generated by the power-generating element 1a tends to become larger.

In the aforementioned composition, M is, for example, at least one selected from the group consisting of In, Y, Yb, Gd, Nd, and Sm. In this case, the ionic conductivity of protons through the solid electrolyte 15 tends to become even higher. M may be another trivalent metal element such as La, Pr, Pm, Eu, Tb, Dy, Tm, or Ga.

The perovskite oxide contained in the solid electrolyte 15 is, for example, a single-phase polycrystalline body. In the aforementioned composition, the amount of oxygen deficiency $\alpha$ is, for example, smaller than or equal to 0.1.

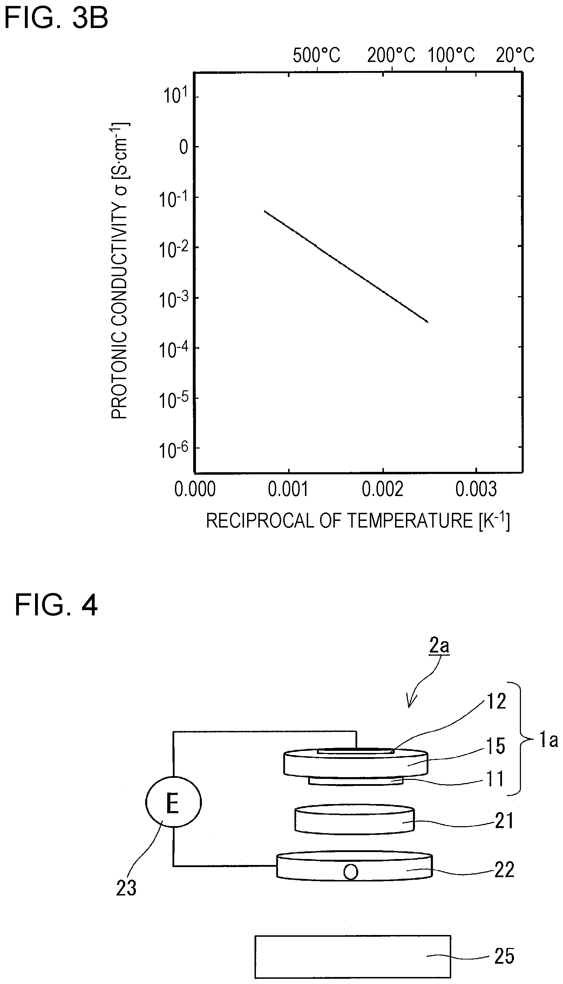

The perovskite oxide contained in the solid electrolyte 15 may have, for example, any of the following compositions. Fig. 3B is graph showing a relationship between protonic conductivity of $BaZr_{0.8}Yb_{0.2}O_{3-\alpha}$ and temperature. It is understood from Fig. 3B that $BaZr_{0.8}Yb_{0.2}O_{3-\alpha}$ satisfies the condition $\sigma \geq 10^{-5}$ Scm$^{-1}$ at 500°C or lower.

$BaZr_{0.8}In_{0.2}O_{3-\alpha}$

$BaZr_{0.8}Yb_{0.2}O_{3-\alpha}$

$BaZr_{0.8}Y_{0.2}O_{3-\alpha}$

$BaZr_{0.8}Gd_{0.2}O_{3-\alpha}$

$BaZr_{0.8}Nd_{0.2}O_{3-\alpha}$

$BaZr_{0.8}Sm_{0.2}O_{3-\alpha}$

$BaZr_{0.4}Ce_{0.2}In_{0.2}O_{3-\alpha}$

$BaZr_{0.6}Ce_{0.2}Gd_{0.2}O_{3-\alpha}$

$BaCe_{0.8}Gd_{0.2}O_{3-\alpha}$

$BaZr_{0.95}Yb_{0.05}O_{3-\alpha}$

$SrCe_{0.8}Gd_{0.2}O_{3-\alpha}$

$CaZr_{0.95}Y_{0.05}O_{3-\alpha}$

The solid electrolyte 15 may contain a BaCe oxide or a $CeO_2$ oxide. In this case, oxide ions can be conducted through the solid electrolyte 15.

The solid electrolyte 15 may contain phosphate glass, tungsten oxide, or tungstic acid. In this case, hydronium ions can be conducted through the solid electrolyte 15.

The solid electrolyte 15 may contain a layered double hydroxide (LDH) containing Mg and Al or an LDH containing Ni and Al. In this case, hydroxide ions can be conducted through the solid electrolyte 15.

The solid electrolyte 15 may be prepared by a solid-phase reaction at high temperatures or may be prepared by sputtering, thermal spraying, or synthesis involving the use of an organic intermediate such as alkoxide.

As shown in Fig. 1, the power-generating element 1a includes terminals 17. The terminals 17 are terminals through which to supply the electrical energy to the outside of the power-generating element 1a. For example, when the external circuit is electrically connected to the terminals 17, the power-generating element 1a can supply the electrical energy to the external circuit.

Fig. 4 is an exploded perspective view schematically showing an example of a power-generating apparatus of the present disclosure. As shown in Fig. 4, the power-generating apparatus 2a includes a power-generating element 1a and an adsorber-desorber 21. The adsorber-desorber 21 communicates with a space around the first electrode 11 and adsorbs or desorbs water vapor depending on temperature. In the power-generating apparatus 2a, for example, the supply of moisture from the adsorber-desorber 21 allows the power-generating element 1a to generate electricity even if the power-generating element 1a is placed in an enclosed space. In the power-generating apparatus 2a, for example, the adsorber-desorber 21 contains a predetermined amount of moisture.

The adsorber-desorber 21 is, for example, placed in contact with the first electrode 11. The first electrode 11 is, for example, placed between the solid electrolyte 15 and the adsorber-desorber 21. The adsorber-desorber 21 may be placed away from the first electrode 11, and another member may be placed between the adsorber-desorber 21 and the first electrode 11.

A material of the adsorber-desorber 21 is not limited to a particular material as long as the adsorber-desorber 21 can adsorb or desorb water vapor depending on temperature. The adsorber-desorber 21 contains, for example, at least one selected from the group consisting of silica gel, a layered double hydroxide, a phosphate hydrate, zeolite, metallic felt, and a metallic porous body. This enables the adsorber-desorber 21 to exert a desired absorption-desorption characteristic against water vapor. The metallic felt is felt formed of metallic fibers, and an example of the metallic felt is nickel felt. An example of the metallic porous body is foam nickel.

As shown in Fig. 4, the power-generating apparatus 2a further includes, for example, a cap 22. The cap 22 can house the power-generating element 1a and the adsorber-desorber 21. The cap 22 is formed of metal such as stainless steel and is electrically connected to the first electrode 11. For example, an electromotive force and an electrical current that are generated in the power-generating apparatus 2a can be measured by electrically connecting the cap 22 and the second electrode 12 to a predetermined measuring device 23.

As shown in Fig. 4, the power-generating apparatus 2a is supplied with heat from a heat source 25. This makes it easy to generate a high electromotive force in the power-generating apparatus 2a.

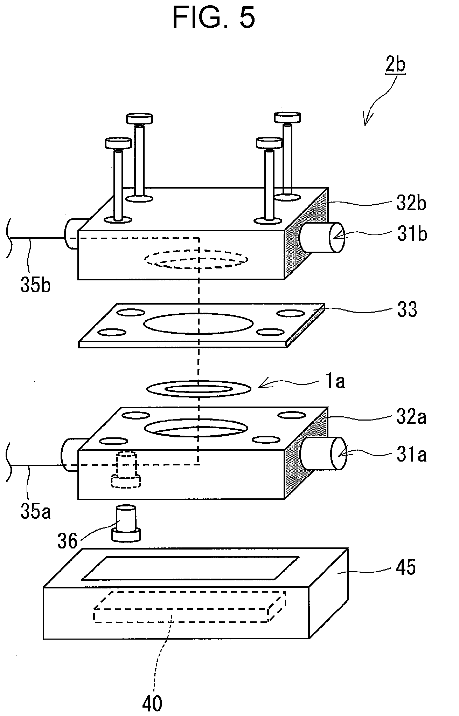

Fig. 5 is an exploded perspective view schematically showing another example of a power-generating apparatus of the present disclosure. As shown in Fig. 5, the power-generating apparatus 2b includes a power-generating element 1a and a first supply path 31a. The first supply path 31a is a flow passage that leads, to the first electrode 11, a first fluid containing water. The first electrode 11 splits the water contained in the first fluid. According to such a configuration, when the water contained in the first fluid is split at the first electrode 11, the power-generating element 1a generates electrical energy. The first supply path 31a is, for example, formed to have contact with the first electrode 11. The first fluid does not contain gas, such as hydrogen gas, that is used as fuel gas in a fuel battery.

The power-generating apparatus 2b further includes, for example, a second supply path 31b. The second supply path 31b, for example, leads, to the second electrode 12, a second fluid containing water. Also according to such a configuration, electrical energy can be generated in the power-generating element 1a. The second supply path 31b is, for example, formed to have contact with the second electrode 12.

In the power-generating apparatus 2b, the first fluid has, for example, a first water vapor pressure. The second fluid has, for example, a second water vapor pressure. The first water vapor pressure is different from the second water vapor pressure. For example, the first water vapor pressure is higher than the second water vapor pressure. In other words, the concentration of water vapor in the first fluid is higher than the concentration of water vapor in the second fluid. For this reason, the concentration of protons that are generated at the first electrode 11 becomes higher than the concentration of protons that are generated at the second electrode 12, so that electrical energy can be generated in the power-generating element 1a.

As shown in Fig. 5, the power-generating apparatus 2b includes a flow passage member 32a, a flow passage member 32b, and a heat-resistant insulating sheet 33. The first supply path 31a is formed inside the flow passage member 32a, and the second supply path 31b is formed inside the flow passage member 32b. The heat-resistant insulating sheet 33 and the power-generating element 1a are placed between the flow passage member 32a and the flow passage member 32b. The flow passage member 32a has an opening formed in a surface thereof that is close to the power-generating element 1a, so that the first fluid flowing through the first supply path 31a can come into contact with the first electrode 11 of the power-generating element 1a. The flow passage member 32b has an opening formed in a surface thereof that is close to the power-generating element 1a, so that the second fluid flowing through the second supply path 3 1b can come into contact with the second electrode 12 of the power-generating element 1a. The heat-resistant insulating sheet 33 has heat resistance and electrical insulating properties. The heat-resistant insulating sheet 33 has an opening formed in the center thereof to have contact with the power-generating element 1a.

The power-generating apparatus 2b includes, for example, a lead 35a and a lead 35b. The lead 35a is connected to the first electrode 11, and the lead 35b is connected to the second electrode 12. This causes electrical energy generated in the power-generating element 1a to be supplied to the external circuit.

The power-generating apparatus 2b further includes, for example, a drain pipe 36. The drain pipe 36 is, for example, attached to the flow passage member 32a. Water generated by the condensation of water vapor in the flow passage member 32a is discharged out of the power-generating apparatus 2b through the drain pipe 36.

As shown in Fig. 5, a heater 40 is placed near the power-generating apparatus 2b. The flow passage member 32a and the flow passage member 32b are kept at a predetermined temperature by heat supplied from the heater 40. The heater 40 is surrounded by a heat insulating material 45.

In the power-generating apparatus 2b, the second electrode 12 may be in contact with the atmosphere. Further, heat may be supplied from the heater 40 to the first electrode 11 of the power-generating element 1a, or the whole power-generating element 1a may be uniformly heated.

Examples

The following describes the present disclosure in detail with reference to Examples. Note, however, that a thermoelectric conversion material of the present disclosure is not limited to specific aspects shown below.

<Samples A-1 to A-8>

With a powder of barium acetate and zirconium hydroxide, a predetermined amount of a powder of indium oxide, yttrium oxide, ytterbium oxide, gadolinium oxide, neodymium oxide, samarium oxide, and cerium oxide was mixed on an as-needed basis. The mixture thus obtained was subjected to grinding mixture with ethanol in an agate mortar. After the powders had been sufficiently mixed, the ethanol was evaporated. Degreasing was done by heating with a burner, and grinding mixture was repeated again in the agate mortar. After that, the mixed powder thus obtained was press-molded into a cylindrical shape to give a molded body. The molded body was heat-treated at 1200°C to 1400°C for 10 to 12 hours. The heat-treated product was coarsely ground, and then further finely ground using a planetary ball mill in benzene or cyclohexane to give a powder granulated to a size of 3 $\mu$m or less from the heat-treated product. The powder thus obtained was dried under vacuum at 150°C, and then subjected to uniaxial pressing or isostatic pressing at a pressure of 2 tons/cm$^2$ to give a cylindrical molded body. This molded body was immediately heat-treated at a temperature of 1500°C to 1700°C for 6 to 12 hours to give sintered bodies according to Samples A-1 to A-8. The sintered bodies according to each separate sample were sufficiently dense, and the densities of these sintered bodies was 96% or more of the calculated density (theoretical density). In addition, the sintered bodies according to each separate sample were single-phase perovskite oxides. Furthermore, when cross-sections of specimens prepared from each separate sintered body were observed using a scanning electron microscope (SEM), particles having a particle size in the range of 1 $\mu$m to 30 $\mu$m were observed.

(Composition Analysis)

The compositions of the surfaces of the specimens prepared from the sintered bodies of each separate sample were analyzed using an energy dispersive X-ray fluorescence spectrometer EDX-700 manufactured by Shimadzu Corporation. The results are shown in Table 1.

(Crystal Structure Analysis)

Using an X-ray diffraction device RINT2100 manufactured by Rigaku Corporation, the X-ray diffraction patterns of the specimens prepared from the sintered bodies according to each separate sample were measured. This measurement involved the use of characteristic X-rays of CuK$\alpha$. Fitting estimation of the crystal lattice constants in the sintered bodies of each separate sample was performed by Rietveld analysis using XRD analysis software JADE6. As a result, it was confirmed that the sintered bodies according to each separate sample were single-phase perovskite oxides.

(Density)

Using a He gas displacement multi-volume pycnometer MICROMERITICS 1305, the volumes of the specimens prepared from the sintered bodies according to each separate sample was determined. Apart from that, the masses of the specimens were measured. From the results of these measurements, the true densities of the sintered bodies according to each separate sample were determined.

Disk-shaped solid electrolytes each having a diameter of 20 mm and a thickness of 0.5 mm were prepared from the sintered bodies according to each separate sample. A Pt-containing paste TR-7905 manufactured by Tanaka Kikinzoku Kogyo K.K. was applied in a circular shape with a diameter of 16 mm onto one principal surface of each of the disk-shaped solid electrolytes. In addition, a Au-containing paste TR-1501A manufactured by Tanaka Kikinzoku Kogyo K.K. was applied in a circular shape with a diameter of 16 mm onto the other principal surface of each of the disk-shaped solid electrolytes. The coating film of Pt-containing paste and the coating film of Au-containing paste were baked for 1 hour inside an electric furnace set at 900°C. In this way, power-generating elements according to Samples A-1 to A-8 were obtained. It is conceivable that Pt-containing electrodes derived from Pt-containing pastes exhibit higher activity for water splitting than Au-containing electrodes derived from Au-containing pastes. In the power-generating elements according to Samples A-1 to A-8, disk-shaped solid electrolytes were prepared using the sintered bodies according to samples A-1 to A-8, respectively.

The power-generating elements were placed on nickel felt formed of hydrated nickel fibers so that the Pt-containing electrodes of the power-generating elements according to each separate sample served as anodes. The power-generating elements were placed in a state where the anodes faced the nickel felt. In addition, as shown in Fig. 4, each of the power-generating elements and the nickel felt were housed in a stainless-steel cap. Solartron 1287, which is a potentiogalvanostat, was connected to the Au-containing electrode, which is the cathode of the power-generating element, and to the stainless-steel cap. The cathode was in contact with the atmosphere. A K-type thermocouple was attached to the solid electrolyte of each of the power-generating elements according to each separate sample. In a state where heat was supplied to the power-generating element while the temperature of a heater placed near the stainless-steel cap was adjusted, an I-V characteristic, which indicates an electromotive force generated and the magnitude of an electrical current taken out from the power-generating element, was measured. Table 1 shows ranges of electromotive forces and temperature ranges in which the electromotive forces are generated when the power-generating elements according to each separate sample were used.

[Table 1]

| SAMPLE | ANODE | SOLID ELECTROLYTE | CATHODE | RANGE OF ELECTROMOTIVE FORCES (mV) | ELECTROMOTIVE FORCE GENERATION TEMPERATURE |
|---|---|---|---|---|---|
| A-1 | Pt | $BaZr_{0.8}In_{0.2}O_{3-\alpha}$ | Au | 10 mV-305 mV | 127°C-310°C |
| A-2 | Pt | $BaZr_{0.8}Yb_{0.2}O_{3-\alpha}$ | Au | 24 mV-600 mV | 120°C-350°C |
| A-3 | Pt | $BaZr_{0.8}Y_{0.2}O_{3-\alpha}$ | Au | 42 mV-431 mV | 120°C-400°C |
| A-4 | Pt | $BaZr_{0.8}Gd_{0.2}O_{3-\alpha}$ | Au | 40 mV-362 mV | 110°C-400°C |
| A-5 | Pt | $BaZr_{0.8}Nd_{0.2}O_{3-\alpha}$ | Au | 20 mV-291 mV | 120°C-360°C |
| A-6 | Pt | $BaZr_{0.8}Sm_{0.2}O_{3-\alpha}$ | Au | 25 mV-288 mV | 130°C-400°C |
| A-7 | Pt | $BaZr_{0.4}Ce_{0.4}In_{0.2}O_{3-\alpha}$ | Au | 45 mV-517 mV | 110°C-380°C |
| A-8 | Pt | $BaZr_{0.6}Ce_{0.2}Gd_{0.2}O_{3-\alpha}$ | Au | 36 mV-453 mV | 110°C-370°C |

As shown in Table 1, it is understood that a predetermined electromotive force is generated in the temperature range of 120°C to 400°C no matter which of Samples A-1 to A-8 the solid electrolyte used pertains.

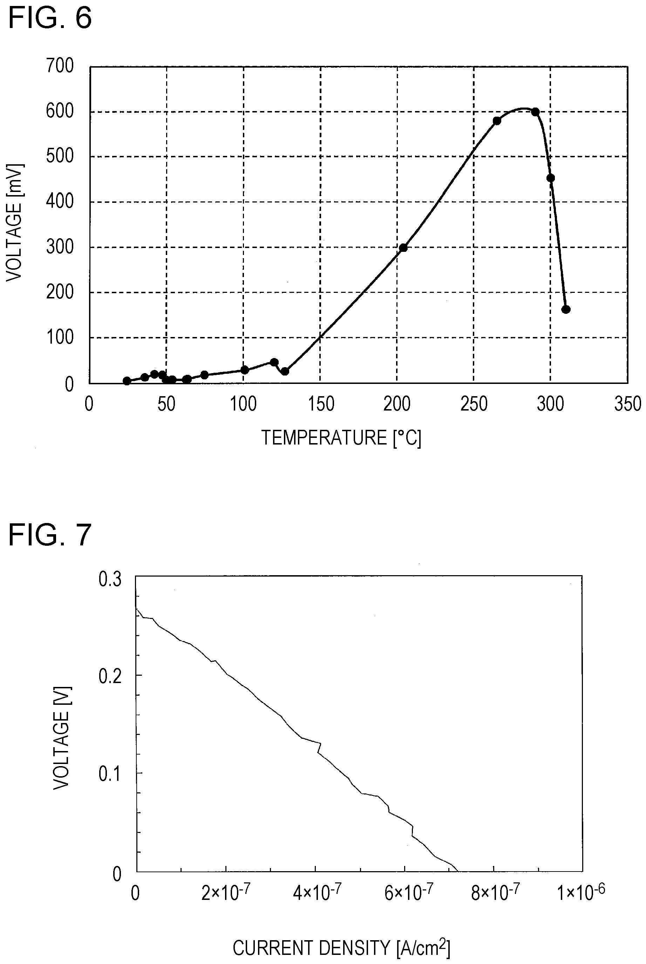

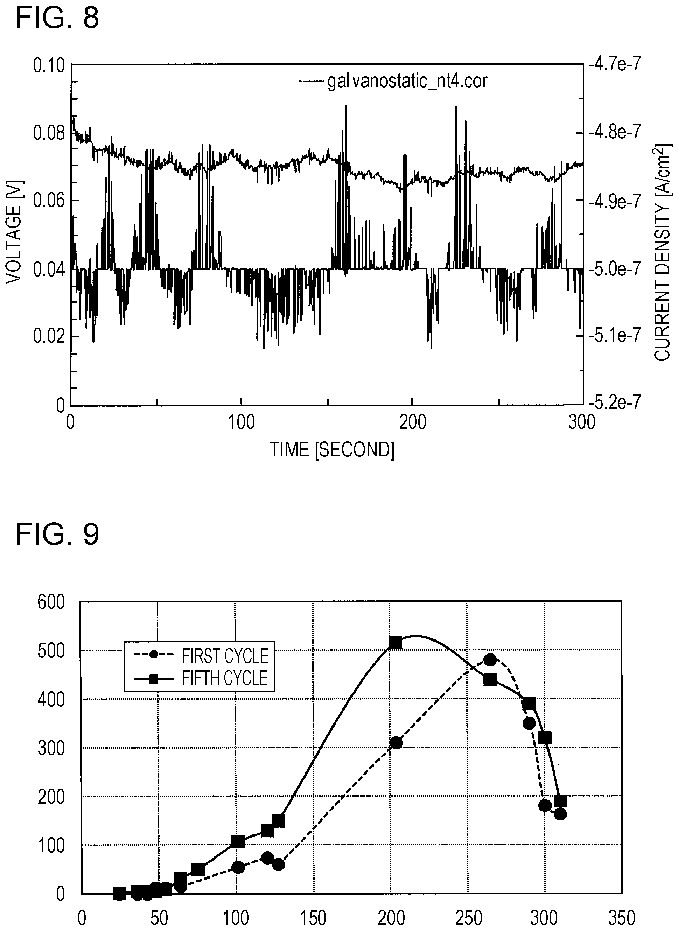

Fig. 6 is a graph showing a relationship between the electromotive force of the power-generating element according to Sample A-2 and temperature. Fig. 7 is a graph showing the I-V characteristic of the power-generating element according to Sample A-2. Fig. 8 is a graph showing the continuous discharge characteristic of the power-generating element according to Sample A-2. The graph shown in Fig. 8 shows a voltage change in the presence of the continuous application of a current load of 0.5 μA. As shown in Fig. 7, when an electromotive force is generated, it is possible to apply a current load, and as shown in Fig. 8, as long as heat is continued to be applied, electricity can be taken out from the power generating element. Further, even when a power-generating element according to another sample was used, it was possible to continuously take out an electrical current.

<Samples A-9 to A-17>

Power-generating elements according to Samples A-9 to A-17 were fabricated in the following manner. Disk-shaped solid electrolytes each having a diameter of 20 mm and a thickness of 0.5 mm were prepared from a sintered body having a composition represented by $BaZr_{0.8}Yb_{0.2}O_{3-\alpha}$ according to Sample A-2. A Pt-containing paste, a Ag-containing paste, a Ni-containing paste, a Pd-containing paste, or a Ru-containing paste were applied in a circular shape with a diameter of 16 mm onto one principal surface of each of the disk-shaped solid electrolytes. In addition, a Cu-containing paste, a Ni-containing paste, an Ag-containing paste, or an Au-containing paste were applied in a circular shape with a diameter of 16 mm onto the other principal surface of each of the disk-shaped solid electrolytes. The Pt-containing paste used was TR-7905 manufactured by Tanaka Kikinzoku Kogyo K.K. The Ag-containing paste used as MH-1063 manufactured by Tanaka Kikinzoku Kogyo K.K. The Ni-containing paste used was a product of DAIKEN CHEMICAL Sales & Mfg. CO., LTD. The Pd-containing paste used was a product of Tanaka Kikinzoku Kogyo K.K. The Ru-containing paste used was a product of Tanaka Kikinzoku Kogyo K.K. The Cu-containing paste used was a product of DAIKEN CHEMICAL Sales & Mfg. CO., LTD. The Au-containing paste used was TR-1501A manufactured by Tanaka Kikinzoku Kogyo K.K. The coating films of paste formed on both surfaces of each of the solid electrolytes were baked for 1 hour inside an electric furnace set at 900°C. In this way, the power-generating elements according to Samples A-9 to A-17 were obtained. As shown in Table 2, the anodes and cathodes of these power-generating elements contained metals derived from the metal-containing pastes described above.

For each of the power-generating elements according to Samples A-9 to A-17, an I-V characteristic, which indicates an electromotive force generated and the magnitude of an electrical current taken out from the power-generating element, was measured in a state where heat was supplied to the power-generating element in the same manner as the power-generating element according to Sample A-2. Each power-generating element was placed so that the anode of each power-generating element faced the nickel felt formed of hydrated nickel fibers. In addition, the cathode of each power-generating element was in contact with the atmosphere. Table 2 shows the maximum electromotive forces of the power-generating elements according to each separate sample and the temperatures at which the maximum electromotive forces are generated.

[Table 2]

| SAMPLE | ANODE | SOLID ELECTROLYTE | CATHODE | MAXIMUM ELECTROMOTIVE FORCE (mV) | MAXIMUM ELECTROMOTIVE FORCE GENERATION TEMPERATURE |
|---|---|---|---|---|---|
| A-9 | Pt | $BaZr_{0.8}Yb_{0.2}O_{3-\alpha}$ | Cu | 579 mV | 271°C |
| A-10 | Pt | $BaZr_{0.8}Yb_{0.2}O_{3-\alpha}$ | Ni | 242 mV | 270°C |
| A-11 | Pt | $BaZr_{0.8}Yb_{0.2}O_{3-\alpha}$ | Ag | 143 mV | 290°C |
| A-12 | Ag | $BaZr_{0.8}Yb_{0.2}O_{3-\alpha}$ | Au | 357 mV | 330°C |
| A-13 | Ag | $BaZr_{0.8}Yb_{0.2}O_{3-\alpha}$ | Cu | 257 mV | 250°C |
| A-14 | Ag | $BaZr_{0.8}Yb_{0.2}O_{3-\alpha}$ | Ni | 189 mV | 280°C |
| A-15 | Ni | $BaZr_{0.8}Yb_{0.2}O_{3-\alpha}$ | Cu | 38 mV | 160°C |
| A-16 | Pd | $BaZr_{0.8}Yb_{0.2}O_{3-\alpha}$ | Au | 515 mV | 311°C |
| A-17 | Ru | $BaZr_{0.8}Yb_{0.2}O_{3-\alpha}$ | Au | 524 mV | 260°C |

As shown in Table 2, it was found that an electromotive force is generated between 120°C to 400°C no matter which of the power-generating elements according to Samples A-9 to A-17 was used. In addition, it was confirmed that the power-generating element according to any of the samples is capable of continuous discharge under a current load of 0.5 μA. It was confirmed that electricity can be taken out by applying heat to a power-generating element formed by a combination of different types of electrode material from each other.

<Sample A-18>

A disk-shaped solid electrolyte having a diameter of 20 mm and a thickness of 0.5 mm was prepared from a sintered body having a composition represented by $BaZr_{0.8}Yb_{0.2}O_{3-\alpha}$ according to Sample A-2. A Pt-containing paste TR-7905 manufactured by Tanaka Kikinzoku Kogyo K.K. was applied in a circular shape with a diameter of 16 mm onto both principal surfaces of the disk-shaped solid electrolyte. The coating films of Pt-containing paste formed on both principal surfaces of the solid electrolyte were baked for 1 hour in an electric furnace set at 900°C. In this way, a power-generating element according to Sample A-18 was obtained.

An apparatus such as that shown in Fig. 5 was used to cause humidified air to flow at a flow rate of 200 ccm to the anode of the power-generating element according to Sample A-18. The humidified air was regulated using a bubbler including a water bath set at a predetermined temperature. The temperature and relative humidity of the humidified air were measured immediately before the humidified air entered the flow passage members. On the other hand, non-humidified room-temperature air was caused to flow at a flow rate of 200 ccm to the cathode of the power-generating element. In addition, heat was supplied to the apparatus by a heater placed near the flow passage members of the apparatus. A K-type thermocouple was attached to the solid electrolyte of the power-generating element to measure the temperature of the power-generating element. Leads extending from the electrodes on both surfaces of the power-generating element were connected to Solartron 1287, which is a potentiogalvanostat, and the electromotive force of the power-generating element according to Sample A-18 was measured. Table 3 shows the electromotive forces of the power-generating element generated when the temperature of the power-generating element was adjusted to 150°C, 200°C, 300°C, and 400°C while the temperature of the humidified air that was supplied to the anode of the power-generating element was adjusted to room temperature (approximately 25°C), 40°C, and 65°C.

[Table 3]

| TEMPERATURE OF HUMIDIFIED AIR | ELECTROMOTIVE FORCE OF POWER-GENERATING ELEMENT AT 150°C | ELECTROMOTIVE FORCE OF POWER-GENERATING ELEMENT AT 200°C | ELECTROMOTIVE FORCE OF POWER-GENERATING ELEMENT AT 300°C | ELECTROMOTIVE FORCE OF POWER-GENERATING ELEMENT AT 400°C |
|---|---|---|---|---|
| ROOM TEMPERATURE | 100 mV | 162 mV | 0.01 mV | 0.1 mV |
| 40°C | 0.1 mV | 0.1 mV | 0.5 mV | 4.5 mV |

(continued)

| TEMPERATURE OF HUMIDIFIED AIR | ELECTROMOTIVE FORCE OF POWER-GENERATING ELEMENT AT 150°C | ELECTROMOTIVE FORCE OF POWER-GENERATING ELEMENT AT 200°C | ELECTROMOTIVE FORCE OF POWER-GENERATING ELEMENT AT 300°C | ELECTROMOTIVE FORCE OF POWER-GENERATING ELEMENT AT 400°C |
|---|---|---|---|---|
| 65°C | 5.1 mV | 3.2 mV | 1.4 mV | 1.1 mV |

As shown in Table 3, it was found that no matter at which of the temperatures the humidified air was supplied to the anode of the power-generating element, an electromotive force was generated, albeit slightly, between 150°C and 400°C. In addition, in all cases, it was confirmed that continuous discharge was possible by applying a current load of 0.1 $\mu$A when the maximum electromotive force was generated. It was confirmed that even if the materials of the electrodes formed on both surfaces of the solid electrolyte in the power-generating element are the same as each other, the power-generating element can generate electricity by adjusting the temperature and humidity of the air supplied to both surfaces. For example, if a member capable of retaining moisture, such as nickel felt or silica gel, is put near the anode of the power-generating element, it is possible to create a difference in the concentration of water vapor in the air that has contact with the electrodes placed on both surfaces of the solid electrolyte. It is understood that also in such a case, it is possible to generate electricity by supplying heat to the power-generating element.

<Sample A-19>

The power-generating element according to Sample A-2 was placed on top of the nickel felt so that the anode of the power-generating element faced the hydrated nickel felt. In addition, a commercially available adsorbent containing silica gel $SiO_2 \cdot nH_2O$ was placed near the power-generating element. In this way, a power-generating apparatus according to Sample A-18 was fabricated. In this power-generating apparatus, a cycle of raising the temperature of the power-generating apparatus from room temperature to 400°C and returning it to room temperature was repeated five times, and the power generation characteristics of the power-generating apparatus were evaluated.

Fig. 9 is a graph showing a relationship between the electromotive force of the power-generating apparatus according to Sample A-19 in the first cycle and the fifth cycle and temperature. As shown in Fig. 9, it was confirmed that the power-generating element according to Sample A-2 generated electricity in the fifth cycle as well as in the first cycle.

Industrial Applicability

A power-generating element of the present disclosure can be used in a variety of uses including uses of a conventional power-generating element.

Reference Signs List

1a power-generating element
2a, 2b power-generating apparatus
11 first electrode
12 second electrode
15 solid electrolyte
17 terminal
21 adsorber-desorber
31a first supply path
31b second supply path

**Claims**

1.  A power-generating element comprising:

    a first electrode that splits water;

a second electrode; and
a solid electrolyte which is placed between the first electrode and the second electrode, ions generated by splitting of water at the first electrode being conducted through the solid electrolyte toward the second electrode, wherein
electrical energy is supplied to an outside of the power-generating element by causing a potential difference between the first electrode and the second electrode.

2.  The power-generating element according to claim 1, wherein
the solid electrolyte has ionic conductivity for one kind of ions selected from the group consisting of a proton, an oxide ion, a hydronium ion, and a hydroxide ion.

3.  The power-generating element according to claim 1 or 2, wherein

the solid electrolyte satisfies a condition $\sigma \geq 10^{-5}$ Scm$^{-1}$ at 500°C or lower,
where $\sigma$ is ionic conductivity of the ions through the solid electrolyte.

4.  The power-generating element according to any one of claims 1 to 3, wherein
the solid electrolyte is an inorganic solid electrolyte.

5.  The power-generating element according to any one of claims 1 to 4, wherein the solid electrolyte contains a perovskite oxide.

6.  The power-generating element according to claim 5, wherein

the perovskite oxide has a composition represented by $BaZr_{1-x-y}Ce_xM_yO_{3-\alpha}$, where

$$0 \leq x < 0.5,$$

$$0.05 \leq y \leq 0.25,$$

M is a trivalent metal element, and
$\alpha$ represents an amount of oxygen deficiency.

7.  The power-generating element according to claim 6, wherein
M is at least one selected from the group consisting of In, Y, Yb, Gd, Nd, and Sm.

8.  The power-generating element according to any one of claims 1 to 7, wherein
a material of the second electrode is different from a material of the first electrode.

9.  The power-generating element according to any one of claims 1 to 8, wherein
the first electrode contains a metal or an alloy containing at least one selected from the group consisting of Pt, Ag, Pd, Ru, Au, Cu, and Ni.

10. The power-generating element according to any one of claims 1 to 9, wherein
the first electrode is configured to make contact with a fluid containing water that is present outside the power-generating element.

11. The power-generating element according to any one of claims 1 to 10, further comprising:
a terminal through which the electrical energy is supplied to the outside of the power-generating element.

12. A power-generating apparatus comprising:

the power-generating element according to any one of claims 1 to 11; and
a first supply path that leads, to the first electrode, a first fluid containing water, wherein
the first electrode splits the water contained in the first fluid.

13. The power-generating apparatus according to claim 12, further comprising:

a second supply path that leads, to the second electrode, a second fluid containing water, wherein
the second electrode is configured to make contact with the second fluid.

14. The power-generating apparatus according to claim 13, wherein

the first fluid has a first water vapor pressure,
the second fluid has a second water vapor pressure, and
the first water vapor pressure is different from the second water vapor pressure.

15. A power-generating apparatus comprising:

the power-generating element according to any one of claims 1 to 11; and
an adsorber-desorber that communicates with a space around the first electrode and that adsorbs or desorbs water vapor depending on temperature.

16. The power-generating apparatus according to claim 15, wherein
the adsorber-desorber contains at least one selected from the group consisting of silica gel, a layered double hydroxide, a phosphate hydrate, zeolite, metallic felt, and a metallic porous body.

17. A power-generating method comprising:

putting, in an environment in which water is present, a power-generating element including a first electrode, a second electrode, and a solid electrolyte placed between the first electrode and the second electrode to generate ions by splitting the water at the first electrode;
conducting the ions toward the second electrode through the solid electrolyte;
generating water by oxidizing or reducing the ions at the second electrode; and
generating an electrical current outside the power-generating element.

18. The power-generating method according to claim 17, further comprising supplying heat lower than or equal to 500°C to at least part of the power-generating element.

## FIG. 1

## FIG. 2

# FIG. 3A

# FIG. 3B

# FIG. 4

# FIG. 5

2b

32b

31b

35b

33

1a

32a

31a

35a

36

45

40

## FIG. 6

## FIG. 7

FIG. 8

FIG. 9

<table>
<tr><td colspan="2">**INTERNATIONAL SEARCH REPORT**</td><td>International application No.<br>**PCT/JP2022/042239**</td></tr>
</table>

**A. CLASSIFICATION OF SUBJECT MATTER**

*H01M 8/12*(2016.01)i; *B01J 23/755*(2006.01)i; *C02F 1/461*(2023.01)i; *H01M 4/90*(2006.01)i; *H01M 4/92*(2006.01)i; *H01M 8/1253*(2016.01)i; *H01M 8/126*(2016.01)i; *H02N 11/00*(2006.01)i
FI: H01M8/12 101; B01J23/755 M; C02F1/461 Z; H01M4/90 M; H01M4/92; H01M8/1253; H01M8/126; H02N11/00 A

According to International Patent Classification (IPC) or to both national classification and IPC

**B. FIELDS SEARCHED**

Minimum documentation searched (classification system followed by classification symbols)

H01M8/12; B01J23/755; C02F1/461; H01M4/90; H01M4/92; H01M8/1253; H01M8/126; H02N11/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2016-103454 A (CHIBA UNIVERSITY) 02 June 2016 (2016-06-02)<br>claims, paragraphs [0013], [0019], [0020], [0022], [0027] | 1-3, 8-14, 17-18 |
| Y | claims, paragraphs [0013], [0019], [0020], [0022], [0027] | 4-7 |
| Y | WO 2020/241115 A1 (PANASONIC INTELLECTUAL PROPERTY MANAGEMENT CO., LTD.) 03 December 2020 (2020-12-03)<br>paragraph [0025] | 4-7 |
| Y | WO 2021/145221 A1 (PANASONIC INTELLECTUAL PROPERTY MANAGEMENT CO., LTD.) 22 July 2021 (2021-07-22)<br>paragraph [0015] | 4-7 |
| A | JP 2020-191265 A (JOSHO GAKUEN) 26 November 2020 (2020-11-26)<br>claims | 1-18 |
| A | US 2018/0366420 A1 (TAN, Aik Jun) 20 December 2018 (2018-12-20)<br>claims | 1-18 |

☐ Further documents are listed in the continuation of Box C.   ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>**23 January 2023** | Date of mailing of the international search report<br>**31 January 2023** |
|---|---|
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br>Telephone No. |

Form PCT/ISA/210 (second sheet) (January 2015)

**INTERNATIONAL SEARCH REPORT**
Information on patent family members

International application No.

**PCT/JP2022/042239**

| Patent document cited in search report | | | Publication date (day/month/year) | Patent family member(s) | | | Publication date (day/month/year) |
|---|---|---|---|---|---|---|---|
| JP | 2016-103454 | A | 02 June 2016 | (Family: none) | | | |
| WO | 2020/241115 | A1 | 03 December 2020 | US paragraph [0035] EP CN | 2022/0056597 3978651 113366149 | A1 A1 A | |
| WO | 2021/145221 | A1 | 22 July 2021 | US paragraph [0019] EP CN | 2022/0311030 4092790 114946058 | A1 A1 A | |
| JP | 2020-191265 | A | 26 November 2020 | (Family: none) | | | |
| US | 2018/0366420 | A1 | 20 December 2018 | WO claims | 2018/236834 | A1 | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018079325 A
- JP 2018073596 A

- JP 2001307546 A

**Non-patent literature cited in the description**

- **S. W. LEE et al.** An electrochemical system for efficiently harvesting low-grade heat energy. *Nature Communications*, 2014, vol. 5, 3942

- Mechanism on appearance of superprotonic conductivity : In the case of zero-dimensional hydrogen-bonded superprotonic conductor. Bulletin of the Transdisciplinary Science Research Institute. Setsunan University, 2019, vol. 5